# EUROPEAN PATENT SPECIFICATION

(11) **EP 3 422 727 B1**
(45) Date of publication and mention of the grant of the patent: **12.02.2020**
(21) Application number: 17178744.3
(22) Date of filing: 29.06.2017
(51) Int. Cl.: H04N 21/442, H04N 21/45, H04N 21/454, H04N 21/4415

(54) **METHOD FOR AUTOMATED PARENTAL CONTROL**
VERFAHREN ZUR AUTOMATISIERTEN KINDERSICHERUNG
MÉTHODE DE CONTROL PARENTAL AUTOMATIQUE

(43) Date of publication of application: 02.01.2019
(73) Proprietor: Vestel Elektronik Sanayi ve Ticaret A.S., 45030 Manisa (TR)
(72) Inventor: GÖKSEL, Onur, 45030 Manisa (TR)
(74) Representative: Ascherl, Andreas

(56) References cited:
- EP-A1- 2 477 395
- US-A- 5 734 720
- US-A- 6 025 869
- US-A1- 2002 129 368
- US-A1- 2004 003 393
- US-A1- 2004 010 798

## Description

The present invention refers according to claim 1 to a method for automated parental control and according to claim 8 to a computer program product for executing such a method.

### Background of the invention

Document US2002129368 discloses a method for Identifying reliably whether a viewer is a man, a woman, or a child based on probabilistic measurements including time of the day and program genres. The method detects viewing patterns and session changes.

Document US2004003393 discloses a method for identifying whether a viewer is a child by using face recognition or if the use of the consumer electronics device takes place during certain hours, such as during the night, in an area such as a bedroom, where the child or other supervised user is expected to be present.

Document US5734720 discloses a television receiver maintaining customer profiles (according to user selections) comprising a record of video programs that are actually watched by the customer for a period of time (e.g. 10 minutes) sufficient to establish that the customer "liked" that program.

Document CN101662659B discloses an interactive network television child lock control method and an electronic program menu server. The method comprises the following steps: the electronic program menu EPG server provides the user with the child lock setting interface and receives the child lock set by the user through the child lock setting interface and the EPG server determines whether or not to play the predetermined channel directly to the user based on the child lock setting after the EPG server receives the information from the user on demand or switches to the predetermined channel.

Document US5548345A discloses a TV/video' viewing supervision system that enables a supervisor, typically a parent controlling children's viewing, to selectably preprogram the hours, programs and/or channels of television, VCR, cable TV, satellite TV and/or game viewing that are allowed and/or blocked from viewing. The system features a channel/time matrix that can be programmed with a keypad-controlled cursor of a hand-held remote unit to set up a viewing schedule for future time period, for example a corning week.

Document US20040010798A1 discloses a guardian review system, which monitors the television programming that a child watches and to report back to parent. The hardware consists of a logical unit which is used to monitor the television programming. The software is divided into two programs: monitor program and the report program. The monitor program analyzes the closed captioning signal, the audio signal, the title and content ratings of the television programming contains any of the offensive items specified by the parent. The monitor program creates data of the offensive language viewed by the child and sends the data to the report program. The reporting program receives criteria from the parent such as time, channel, during, rating, and content of a television program. The report program can operate either on the television or on an external computing device, such as the parent's personal computer.

Thus, at present, parents decide to schedule programs manually for their children, and they have to encrypt channels manually. When each channel is added to the list, they check the content and repeat this process. Also, they have to re-activate it when they leave the TV (If they turn off parental control settings while watching tv). It appears that such systems are time consuming since the parents need to set up the system and therefore not often used.

### Object of the invention

It is therefore the object of the present invention to provide an alternative parental control method, in particularly a method that is less time consuming.

### Description of the Invention

The before mentioned object is solved according to claim 1 by a method for automated parental control. This method preferably comprises at least the steps: Receiving multiple TV channels, wherein each channel provides a program, receiving EPG data for multiple programs, displaying a program by means of a screen device, analyzing the EPG data related to the displayed program, determining if said program matches with a predefined child criteria, determining how long the program is displayed, limiting access to all other programs provided at the same time which do not match with the predefined child criteria in case the displayed program matches with the predefined child criteria and has been displayed for a predefined period of time.

This solution is beneficial since the program understands from the displayed program if an adult or a child is watching. Thus, adults do not need to constantly supervise the children. Furthermore, the adults do not need to spend a lot of time in programming a parental control system.

Further preferred embodiments are subject-matter of the following specification parts and/or of the dependent claims.

According to a preferred embodiment of the present invention the EPG data provides at least start time data, wherein start time data defines the time when a specific program starts, and/or end time data, wherein end time data defines the time when a specific program ends, and/or channel name data, wherein channel name data identifies the name of the respective channel, and/or channel type data, wherein channel type data identifies to which content category the programs provided on a respective channel belong, and/or rating data, wherein rating data defines for which age the respective program is defined as being appropriate. This embodiment is beneficial since the required data can be derived from the EPG data, without a need of modifying the EPG data source.

The child criteria defines according to a further preferred embodiment a program, which is provided by means of a dedicated child channel and/or which is labeled with a child channel category rating. Child channel category rating preferably provides information about the recommended age of a person with respect to a specific program. This embodiment is beneficial since the information about a dedicated child channel and/or the child category rating is fully sufficient to determine that a child is watching TV. Thus, further information, like start time or end time, is not required. Therefore, fast and precise processing is possible.

Access to all other programs which do not match with the predefined child criteria is limited according to a further preferred embodiment of the present invention until a delimiting action is performed. Limited access can be preferably understood as reduced volume or encrypted picture or black screen. This embodiment is beneficial since the end of a program does not cause delimiting automatically as long as the following program does not match with the child criteria.

Delimiting action comprises according to a further preferred embodiment of the present invention entering of a pin code via a remote control and/or visual detection of an adult in front of the screen device which displays the program and/or entering of acoustic commands and/or verifying a finger print, in particularly on a remote control or a mobile device, like a smartphone, wherein the mobile device has a data connection with the screen device. This embodiment is beneficial since one or multiple possibilities for securely delimiting is/are possible.

The predefined period of time lasts according to a further preferred embodiment of the present invention at least 2 min or at least 5 min or at least 10 min or at least or up to 15 min or at least or up to 20 min. This embodiment is beneficial since the probability is very high that a child is watching TV in case the program matching with the child criteria is displayed more than the predefined period of time.

According to a further preferred embodiment of the present invention the screen device is a TV or a computer, in particular a tablet pc or smartphone, or a set top box. This embodiment is beneficial since such devices are the most common for watching programs.

The before mentioned object is also solved by a computer program product according to claim 8. Said computer program product is preferably configured for executing a method according to any of the described methods.

Further benefits, goals and features of the present invention will be described by the following specification of the attached figure, in which exemplarily components of the invention are illustrated. Components of the device and methods according to the invention, which match at least essentially with respect to their function can be marked with the same reference sign, wherein such components do not have to be marked or described multiple times with respect to said figure. In the following the invention is just exemplarily described with respect to the attached figure.

### Brief Description of the Drawings

- Fig. 1: shows exemplarily a data base table; and
- Fig. 2: shows exemplarily a block diagram of a system or method according to the present invention.

### Detailed Description of the Drawings

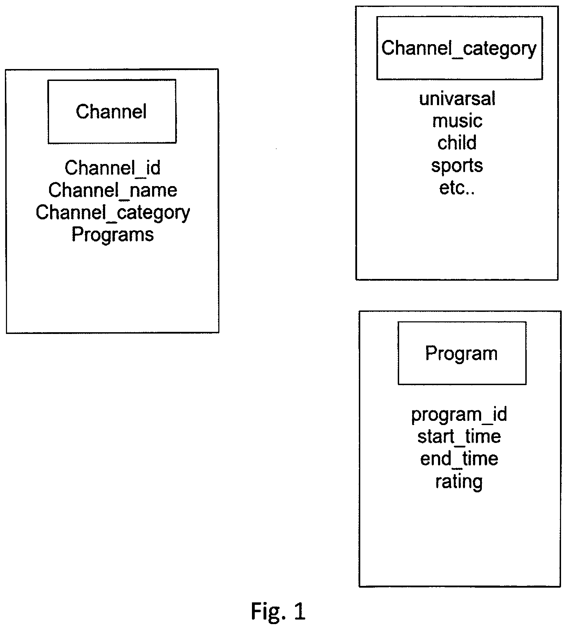

Fig. 1 shows multiple data base tables, wherein data of preferably all data base tables is part of the EPG data. Thus, channel data can be considered as overlaying category, wherein channel category data or program data can be considered as sub categories. Channel data preferably comprises channel identification data and/or channel name data and/or channel category data and/or program data. Channel category data can comprise data identifying different categories, line universal, music, child, sports, shopping, etc. Program data can comprise program identification data and/or start time data and/or end time data and/or rating data.

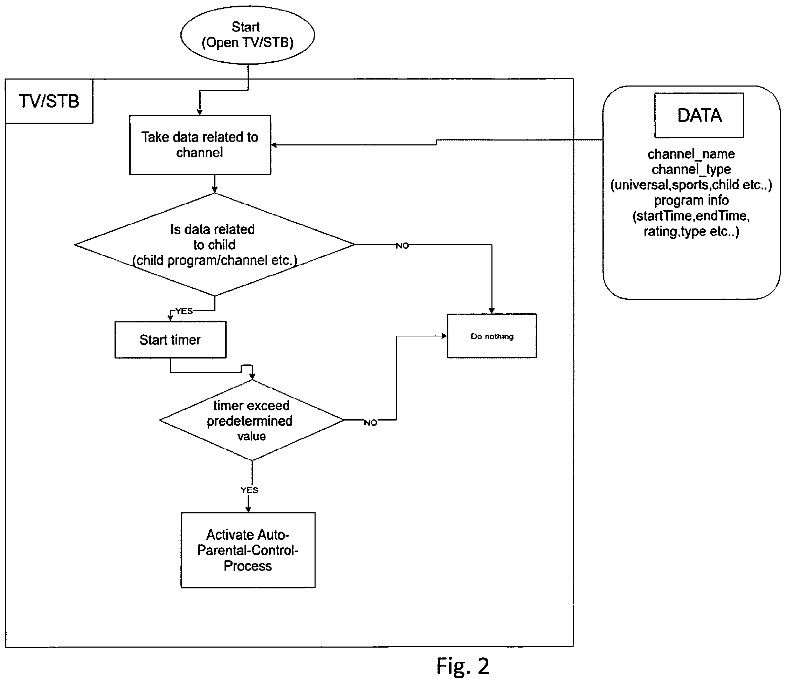

Fig. 2 shows a block diagram of the present invention. The screen device is started respectively a channel tuning operation is executed. Then program/channel information data with respect to the displayed program is gathered from EPG data in real time from broadcast stream/internet. Then the system analyses the program/channel information data, in particularly tables like in fig. 1 are created and analyzed.

If the program is a suitable program for children, the timer starts and a follow-up time is determined.

It is preferably determined in dependency of the type of channel, the channel category or content of the program if a program is suitable for children.

Thirdly, If the timer exceeds a predetermined value (default value can be selected as 15 minutes because minimum time-interval of child program is approximately 20 minutes), it is decided that the person, who follows the channel, is a child.

Fourthly, the screen device, in particularly TV/STB, automatically encrypts channels respectively programs that are inappropriate for the audience on a certain age (child-age can be predefined or changeable from settings menu) according to channel data.

Channel encryption preferably utilizes a channel rate from EPG data (default rate value can be selected, e.g. +12)

Encryption process or limited access preferably means that the sound volume of channel/program is reduced, in particularly muted, and/or the screen of channel is a black screen (icon of locked can be shown on the channel) or a screen that shows predefined information, in particularly the time and/or weather forecast and/or a slid show and/or program information about this channel and/or further channels).

Thus, the present invention refers to a method for automated parental control. That method preferably comprises at least the steps: Receiving multiple TV channels, wherein each channel provides a program, receiving EPG data for multiple programs, displaying a program by means of a screen device, analyzing the EPG data related to the displayed program, determining if said program matches with a predefined child criteria, determining how long the program is displayed, limiting access to all other programs provided at the same time which do not match with the predefined child criteria in case the displayed program matches with the predefined child criteria and has been displayed for a predefined period of time.

## Claims

1. Method for automated parental control,
at least comprising the steps:
receiving multiple TV channels, wherein each channel provides a program,
receiving EPG data for multiple programs,
displaying a program by means of a screen device,
analyzing the EPG data related to the displayed program,
determining if said program matches with a predefined child criteria,
determining how long the program is displayed,
limiting access to all other programs provided at the same time which do not match with the predefined child criteria in case the displayed program matches with the predefined child criteria and has been displayed for a predefined period of time.

2. Method according to claim 1,
**characterized in that**
the EPG data provides at least start time data, wherein start time data defines the time when a specific program starts, and/or end time data, wherein end time data defines the time when a specific program ends, and/or channel name data, wherein channel name data identifies the name of the respective channel, and/or channel type data, wherein channel type data identifies to which content category the programs provided on a respective channel belong, and/or rating data, wherein rating data defines for which age the respective program is defined as being appropriate.

3. Method according to claim 1 or 2,
**characterized in that**
the child criteria defines a program, which is provided by means of a dedicated child channel and/or which is labeled with a child channel category rating.

4. Method according to any of the preceding claims,
**characterized in that**
access to all other programs which do not match with the predefined child criteria is limited until a delimiting action is performed.

5. Method according to any of the preceding claims,
**characterized in that**
the delimiting action comprises entering of a pin code via a remote control and/or visual detection of an adult in front of the screen device which displays the program and/or entering of acoustic commands and/or verifying a finger print, in particularly on a remote control or a mobile device, like a smartphone, wherein the mobile device has a data connection with the screen device.

6. Method according to any of the preceding claims,
**characterized in that**
predefined period of time is at least 2 min or at least 5 min or at least 10 min or up to 15 min or up to 20 min.

7. Method according to any of the preceding claims,
**characterized in that**
the screen device is a TV or a computer, in particular a tablet pc or smartphone, or a set top box.

8. Computer program product for executing a method according to any of the preceding claims.

## Patentansprüche

1. Verfahren zur automatisierten elterlichen Kontrolle,
mindestens umfassend die Schritte:
Empfangen mehrerer TV-Kanäle, wobei jeder Kanal ein Programm bereitstellt,
Empfangen von EPG-Daten für mehrere Programme,
Anzeigen eines Programms mit Hilfe einer Bildschirmvorrichtung,
Analysieren der EPG-Daten, die sich auf das angezeigte Programm beziehen,
Bestimmen, ob das Programm mit einem vordefinierten Kinderkriterium übereinstimmt,
Bestimmen, wie lange das Programm angezeigt wird,
Beschränkung des Zugriffs auf alle anderen gleichzeitig bereitgestellten Programme, die nicht den vordefinierten Kinderkriterien entsprechen, falls das angezeigte Programm den vordefinierten Kinderkriterien entspricht und für einen vordefinierten Zeitraum angezeigt wurde.

2. Verfahren nach Anspruch 1,
**dadurch gekennzeichnet, dass**
die EPG-Daten mindestens Startzeitdaten bereitstellen, wobei die Startzeitdaten die Zeit definieren, zu der ein bestimmtes Programm beginnt, und/oder Endzeitdaten, wobei die Endzeitdaten die Zeit definieren, zu der ein bestimmtes Programm endet, und/oder Kanalnamensdaten, wobei die Kanalnamensdaten den Namen des jeweiligen Kanals identifizieren, und/oder Kanaltypdaten, wobei die Kanaltypdaten bestimmen, zu welcher Inhaltskategorie die auf einem bestimmten Kanal bereitgestellten Programme gehören, und/oder Bewertungsdaten, wobei die Bewertungsdaten definieren, für welches Alter das jeweilige Programm als angemessen definiert ist.

3. Verfahren nach Anspruch 1 oder 2,
**dadurch gekennzeichnet, dass**
das Kinderkriterium definiert ein Programm, das über einen speziellen Kinderkanal bereitgestellt wird und/oder mit einer Bewertung der Kinderkanal-Kategorie versehen ist.

4. Verfahren nach einem der vorhergehenden Ansprüche,
**dadurch gekennzeichnet, dass**
der Zugriff auf alle anderen Programme, die nicht mit den vordefinierten Unterkriterien übereinstimmen, ist bis zur Durchführung einer Entsperraktion eingeschränkt.

5. Verfahren nach einem der vorhergehenden Ansprüche,
**dadurch gekennzeichnet, dass**
die Entsperraktion die Eingabe eines PIN-Codes über eine Fernbedienung und/oder die visuelle Erfassung eines Erwachsenen vor der Bildschirmvorrichtung, die das Programm anzeigt, und/oder die Eingabe akustischer Befehle und/oder die Überprüfung eines Fingerabdrucks, insbesondere auf einer Fernbedienung oder einer mobilen Vorrichtung, wie einem Smartphone, umfasst, wobei die mobile Vorrichtung eine Datenverbindung mit der Bildschirmvorrichtung aufweist.

6. Verfahren nach einem der vorhergehenden Ansprüche,
**dadurch gekennzeichnet, dass**
vordefinierte Zeitspanne mindestens 2 min oder mindestens 5 min oder mindestens 10 min oder bis zu 15 min oder bis zu 20 min ist.

7. Verfahren nach einem der vorhergehenden Ansprüche,
**dadurch gekennzeichnet, dass**
die Bildschirmvorrichtung ein Fernseher oder ein Computer, insbesondere ein Tablet-PC oder Smartphone, oder eine Settop-Box ist.

8. Computerprogrammprodukt zum Ausführen eines Verfahrens nach einem der vorhergehenden Ansprüche.

## Revendications

1. Méthode de contrôle parental automatisé,
au moins comprenant les étapes :
la réception de plusieurs chaînes de télévision, chaque chaîne fournissant un programme,
la réception de données EPG pour plusieurs programmes,
l'affichage d'un programme à l'aide d'un écran,
l'analyse des données EPG relatives au programme affiché,
déterminer si ledit programme correspond à un critère enfant prédéfini,
déterminer la durée d'affichage du programme,
limiter l'accès à tous les autres programmes fournis en même temps qui ne correspondent pas aux critères enfant prédéfinis si le programme affiché correspond aux critères enfant prédéfinis et a été affiché pendant une période de temps prédéfinie.

2. Méthode selon la revendication 1,
**caractérisé en ce que**
les données EPG fournissent au moins des données de temps de début, les données de temps de début définissant l'heure de début et/ou de fin d'un programme spécifique, les données de temps de fin définissant l'heure de fin et/ou les données de nom de canal, les données de nom de canal identifiant le nom du canal respectif et/ou les données de type de canal, les données de type de canal identifiant à quelle catégorie de contenu appartiennent les programmes fournis sur un canal respectif, et/ou les données de classement, les données de classement définissant pour quel âge le programme respectif est défini comme approprié.

3. Méthode selon la revendication 1 ou 2,
**caractérisé en ce que**
le critère enfant définit un programme qui est fourni au moyen d'une chaîne enfant dédiée et/ou qui est étiqueté avec une classification par catégorie de chaîne enfant.

4. Méthode selon l'une quelconque des revendications précédentes,
**caractérisé en ce que**
l'accès à tous les autres programmes qui ne correspondent pas aux critères enfant prédéfinis est limité jusqu'à ce qu'une action de délimitation soit effectuée.

5. Méthode selon l'une quelconque des revendications précédentes,
**caractérisé en ce que**
l'action de délimitation comprend l'entrée d'un code PIN via une télécommande et/ou la détection visuelle d'un adulte devant l'écran qui affiche le programme et/ou l'entrée de commandes acoustiques et/ou la vérification d'une empreinte digitale, en particulier sur une télécommande ou un appareil mobile, comme un smartphone, où l'appareil mobile possède une connexion de données avec l'écran.

6. Méthode selon l'une quelconque des revendications précédentes,
**caractérisé en ce que**
La durée prédéfinie est d'au moins 2 min ou d'au moins 5 min ou d'au moins 10 min ou jusqu'à 15 min ou jusqu'à 20 min.

7. Méthode selon l'une quelconque des revendications précédentes,
**caractérisé en ce que**
l'écran est un téléviseur ou un ordinateur, en particulier une tablette PC ou un smartphone, ou un décodeur.

8. Produit de programme d'ordinateur pour l'exécution d'une méthode selon l'une quelconque des revendications précédentes.
